# EUROPEAN PATENT SPECIFICATION

(11) **EP 1 661 463 B1**
(45) Date of publication and mention of the grant of the patent: **03.01.2007**
(21) Application number: 04078209.6
(22) Date of filing: 25.11.2004
(51) Int. Cl.: A21C 5/00, A21C 3/04

(54) **Apparatus for depositing edible mass**
Vorrichtung zum Ablegen von essbarer Masse.
Dispositif de dépôt de pâte consommable

(43) Date of publication of application: 31.05.2006
(73) Proprietor: AASTED-MIKROVERK APS, 3520 Farum (DK)
(72) Inventor: Aasted, Lars, 2942 Skodsborg (DK)
(74) Representative: Heiden, Finn

(56) References cited:
- EP-A- 0 363 184
- EP-A- 0 909 534
- DE-A1- 4 218 385
- DE-C- 245 926
- DE-C- 397 678
- GB-A- 736 047
- NL-C- 31 314
- US-A- 1 934 549
- US-A- 2 728 308
- US-A- 3 547 050
- US-A- 3 561 372
- US-A- 3 608 516
- US-A- 3 773 448
- US-A- 4 413 973
- US-A- 5 378 133
- US-A1- 2001 038 875
- US-B1- 6 405 643
- "SINUSOIDAL ROTOR PUMP SMOOTHLY HANDLES DIFFICULT AND DELICATE LIQUIDS" DESIGN ENGINEERING, MORGAN-GRAMPIAN LTD. LONDON, GB, 1 April 1989 (1989-04-01), page 24, XP000111546 ISSN: 0308-8448

## Description

The present invention concerns the field of continuous working equipment utilized in the confectionery or bakery industry. The inventive apparatus is for depositing strands of mass to be cut into size or lumps of mass which could be decorated or even moulded into shape in a further processing step. The confectionery mass could for example be chocolate mass with a content or pure cocoa mass or any mass having a content of chocolate-like mass. It could be marzipan, or caramel mass or toffee mass or even jam or It could also be any type of dough to be baked into cookies or cakes or the like.

The apparatus comprises an elongated trough and at least one roller arranged longitudinally in the trough for transporting the mass in direction against the bottom of the trough. Furthermore, dosing means are arranged at the bottom having an axis of rotation extending longitudinally in the trough.

The mass of confectionery or dough is deposited continuously as strands or as gobs or lumps on an underlying conveyor. When we are talking about dough rows of lumps of dough are deposited and transported on to a baking oven and possibly further on to stations making final treatments with decorations of masses such as chocolate, chocolate-like recipes or other types of recipes with sugar content. Any type of mass used for decoration purposes on bakery articles apply. When the mass constitutes of confectionery such as chocolate or chocolate-like mass, then the mass is typically deposited for moulding purposes into underlying mould cavities or deposited directly on the conveyor belt.

The known apparatuses comprise a trough, which is formed symmetrically about each side of a central, vertical symmetry plane. In the trough are arranged at least two parallel and closely situated rollers, each arranged symmetrically to each side of the central, vertical symmetry plane extending through the trough as well. The two rollers are rotated in direction against each other by a separate motor. The confectionery mass or dough in the trough is then fed centrally in the trough in between the rollers and directed down towards the underlying dosing means. Typically the known rollers have some kind of rough surface or longitudinally extending impressions for enhancing the transportation of the mass in between the rollers. However, when mass with content of ingredients such as nuts or pieces of chocolate shall be fed securely to the lower dosing means, then the distance between the two upper feed-ing rollers must be large in an attempt not to crush the ingredients. However, then the grip of the rollers become lesser and the ability of the apparatus to transport the mass to the dosing means decrease unacceptably and so does the overall dosing capacity of the apparatus. Consequently, the prior known apparatus are less desirable for depositing mass with ingredients. So if used for depositing mass with ingredients a compromise between acceptable dosing capacity and distance between the rollers is often found with the consequence that when major ingredients are crushed long unacceptable "tales" of crushed ingredient are left in the mass.

The dosing means are arranged centrally and also symmetrically about each side of the symmetry plane. The known dosing means elaborated after the double cycloid principle consisting of multiple pairs of engaging toothed wheels being driven by two parallel shafts arranged to each side of the symmetry plane. Each set of engaging, toothed wheels works as a separate pump under which is arranged a depositing opening. The number of openings then corresponds to the number of lumps of mass deposited in each row extending across the conveyor. A nozzle is typically arranged under each opening giving the desired shape to each lump. The desired amount of mass in each lump is determined by utilizing vacuum to cut off the mass flow by reversing the shafts and thereby the toothed wheels. A wire-cutter could also be arranged under the row of openings when the mass is deposited as extruded strands.

When the known depositor trough from the beginning is constructed for depositing only one single type of mass, the utility is locked to that purpose only as later modifications for depositing two or three types of mass are impossible. The depositor must simply be constructed for the intended purpose and for the number of masses to be handled. The known central arrangement of the depositing flow of the mass necessitated by the central or symmetrical arrangement of the dosing means with the twin shafts with the toothed wheels makes any simultaneous external dosing of other masses to same point of delivery at the nozzle impossible at a later stage.

If the availability of depositing more than one type of mass or also ingredients is required, the known depositor must simply be build from the start containing partitionings for the desired typically two or three different masses or ingredients to be deposited. The required two feeding rollers and underlying dosing means for each mass type are arranged in each partitioning or separate chamber in the trough, so that the masses are channelled to the same central depositing opening or nozzle for being part of the same article or cake.

Also the double arrangement of the feed rollers necessitates a certain large width of the trough.

Then, if depositing of three different types of masses are required, then three pair of feeding rollers and underlying dosing means are arranged symmetrically about the vertical plane in the trough. The building wise becomes expensive and the construction becomes voluminous and heavy and creates problems with mounting to the production line at the required position. The high weight means, that the support requires an especially strong structure as movements with the conveyor during depositing and thereby high kinetic energy is involved. Mounting and reinstalling of the voluminous depositor unit for cleaning and service purposes also becomes cumbersome. If only one of the chambers are utilized during a production period then the two other chambers become superfluous and create drawbacks in especially too high weight and space requirements.

Also the known solution of the toothed wheels is not particularly suitable for transporting mass with ingredients. The teeth of the opposing wheels simply provides for multiple small volumes each of which are not capable of accommodating larger ingredients such as raisins, chocolate pieces, fruit, etc which then becomes pressed, flattened out or even separated. Ingredients are also caught in between the outer top of each tooth and the dosing casing, so that the ingredients are milled or crunched.

When using the reversing technique of the shafts and the toothed wheels the cut off volume of mass varies from time to time. The known construction by which a triangle-shaped volume of mass is always left in between the teeth and the opening, simply excludes any clean cutting at the top of the opening.

DE 245 926 C discloses an apparatus according to the introductory part of claim 1 for depositing dough. The impeller blades constitute stiff knives maintained radially movable in slots in the roller. Before the knives reach the raised part of the trough they are withdrawn by mechanical means to a safe position in the roller, so that engagement with the raised part is avoided.

The inventive solution is characterised in that the impeller blades are flexible, and that longitudinally recesses are arranged in the peripheral surface of the roller, so that the impeller blades can bend into these recesses when they pass the raised part of the inner surface of the trough.

During revolution of the roller the impeller blades transport mass from the trough and through the gap towards the dosing means. The flexible impeller blades simply grip into the mass and bring it with into the gap. In the gap the mass is securely transported by the impellers towards the dosing means.

Any ingredients in the mass such as nuts, chocolate pieces or other types of ingredients are gently swept into the gap without any impact on the ingredients. In the gap large chambers are present in between the neighbouring impeller blades sweeping through the gap. Then large amount of mass with or without ingredients are transported at the same time towards the dosing means. This secures that the texture of the mass such as of dough is not being influenced by the transport.

The flexibility of the impeller blades is a safeguard for avoiding major pressure building up in the mass. During revolution of the roller, the impeller blades presently in the gap will simply flex more or less aside if pressure exceeding a certain limit is building up in the gap. Some of the mass present in the gap then avoids the transporting action of the impeller blades. The relief pressure is controlled by the flexibility of the impeller blades and may then be altered by changing from impellers with great flexibility and to impellers with lesser flexibility when required. For example could impellers with greater flexibility be applied when types of mass such as dough having delicate texture important to preserve all the way through the apparatus are deposited with the apparatus. Impellers with lesser flexibility could be applied when masses such as caramel, toffee or the like is deposited.

Preferably the radial length of the impellers is adapted to the width of the gap, so that the ends of the impellers reach the inner surface of the trough. If the ends of the impellers are weared then certain flexibility still secures that the impeller tightens against leakage during rotation.

A longitudinally extending part of the inner surface of the trough is arranged close to the periphery of the roller, so that the gap is essentially reduced or diminished over that part. One at a time the impeller blades are bent over the part of the trough arranged close to the periphery of the roller, so that all of the mass transported through the gap is delivered out through the dosing means. The longitudinally extending part of the trough could also be a thickening of the inner surface of the trough or a separate part, which could be mounted in a groove or the like.

Longitudinally extending recesses are arranged in the peripheral surface of the roller, so that the impeller blades can bend into these recesses when they pass the longitudinally extending part of the inner surface of the trough arranged close to the periphery of the roller. Then a superb tightening action against leakage of mass being returned to the trough is achieved.

By an embodiment of the invention the impeller blades comprise longitudinally extending thickenings adapted to be fixed in longitudinally extending grooves in the periphery of the roller. A simple and strong attachment and release are then secured.

The longitudinally extending thickenings of the impeller blades can be fixed in the grooves of the rollers by rods arranged longitudinally in the grooves being a solution that is very fast to dismantle and mount again for exchange of impeller blades and for cleaning purposes.

The apparatus comprises a further longitudinally extending, auxiliary roller arranged above the main roller and close to the inside of the trough. Masses with a very low inner shear force and high inner smearing such as dough for cookies or marzipan may then be perfectly fed to the main roller with a sufficient pressure build up.

Advantageously the dosing means comprises only a single, longitudinally extending shaft, and at least one cylindrical chamber, in which is arranged a disc-shaped rotor formed as a wave-shaped displacer being rotated by the single, longitudinally extending shaft.

The disc-shaped rotor is formed as a wave-shaped displacer deviating from a planar sheave. In the cylindrical chamber the wave-formed sheave extends forth and back between the opposite sides of the chamber, so that separate volumes are provided around the shaft for transporting the confectionery mass or dough to the depositing opening.

By the rotation of the roller the mass is transported continuously on to the dosing means, in which the rotors move the mass gently on to the depositing openings. Then a synergy effect is obtained between the combination of the main roller with the flexible impeller blades and the wave-shaped displacer of the dosing means, as the mass is then transported gently without impact on the ingredients all the way from the trough and out through the dosing means. Neither is the texture of the mass influenced nor is the ingredients effected.

As the dosing means comprise only one shaft instead of two as by the prior art, it is secured, that the dosing means can be arranged asymmetrically in the trough. Thereby, it becomes possible to connect the trough with another trough for depositing a further mass or ingredients when required. If then only one mass type is required for depositing again at a later stage, then the surplus trough or troughs are simply removed again.

This construction-wise becomes especially optimal when the dosing means are arranged at the transition between the bottom of the trough and one of the longitudinal sidewalls of the trough. Then the one of the longitudinal sidewalls of the trough, at which the dosing is arranged, could advantageously have the shape of an essentially planar, vertical surface, which enhances mounting of a further trough or depositing unit.

When the bottom and side wall constitute part of the casing of the dosing means the depositing openings can be arranged in the transition between trough bottom and wall, so that the mass can be joined at the underlying nozzle with one or more other masses or ingredients from an optional side-mounted trough or depositing unit.

The achieved geometry of the dosing means, by which the outer periphery of the rotor gently sweeps the inner surface of the dosing housing in a wave-like intermittent movement secures, that any mass with a content of ingredients, being large or small or soft or hard are safely swept into the dosing chambers, transported trough the dosing means together with the mass and safely being deposited at the opening.

The fewer and much larger dosing chambers than in the prior art secures, that no damage is made to the ingredients during passage trough the rotor housing.

When the mass reaches the deposit opening, the periphery of the rotor again sweeps the depositing opening in a wave-like intermittent movement, which provides a clean and precise cut of the mass at each depositing. Then the dosing accuracy is severely improved in comparison with the known solutions by which the triangle shaped volume of mass under the toothed rollers sets free uncontrollable varying amounts giving rise to inconsistency in amounts of mass actually deposited on the conveyor.

Also the dosing capacity with the inventive apparatus has a huge potential in comparison with the prior art with the pair of toothed rollers. When the inventive rotor has turned 5° the same amount of mass is deposited as when the prior toothed rollers have turned 180°. And yet the overall size of each inventive dosing chamber is not larger than the overall size of the prior art housing. This means that the novel dosing means has a potential capacity which is up to 36 times larger than of the prior solution.

The form and curvature of the wave-shape of the rotor could be essentially any within the inventive idea as long as it has an even and smooth extension.

A sine-wave-shaped configuration of the displacer comprising four waves each extending over 90° of the rotor has however proven to be simple and fast to manufacture.

Also, striving to eliminate the compression of the mass being dosed, a solution by which the waves of the rotor are formed by essentially straight lines connecting tops and bottoms of the waves was surprisingly successful. Especially when handling dough it is of outmost importance to the baked end result, that the texture of the dough is maintained as unchanged as possible during depositing. Only then, the dough can maintain exactly the precise texture as created and desired by the baker. This means that compression of the dough through the depositor must be minimal. However, it is well-known that the prior known depositor, such as the previously described ones has an impact on the dough texture, the extent of which could not be foreseen for the particular dough type to be handled and which must always be taken into account and compensated for.

Tests with some of the most used dough types in the bakery industry deposited with the inventive solution disclosed, that there is essentially no compression of the dough mass. So what was discovered with the above inventive solution was, that the dosing means had remarkably little or diminishing influence even on masses sensitive to shear or having a "cricital" texture, which must be preserved all the way through the process.

Generally, on basis of that knowledge and intensive tests with different masses, it could then be concluded, that when the waves of the rotor are formed by essentially straight lines connecting tops and bottoms of the waves the rotor has essentially no influence on the structure of the dough. It could be assumed that this benefit is also realised when other types of mass such as any type of confectionery mass is handled.

Also with this solution the distribution of the ingredients in the mass was preserved when passed through the dosing means.

By rotation of the shaft the angular velocity could be regulated in accordance with the size of the actual volume section at the opening, so that the deposited mass string or lump is formed as desired. When extruding a string the angular velocity could be regulated so that the string has a constant width or a constant volume of mass is deposited per time unit. Also the angular velocity could be regulated slower and slower and finally reversed when a lump is deposited for achieving a drop-like shape. With a trial and error test any configuration is achievable.

The invention is explained further below by reference to preferred embodiments as well as the drawings, in which
fig. 1 discloses schematically in perspective an apparatus according to the invention and an underlying conveyor onto which the mass is continuously deposited in rows,
fig. 2 in vertical section the apparatus of fig. 1,
fig. 3 the same as in fig. 2 with the roller in another position,
fig. 4 schematically in perspective and partly in section the elongated dosing means of fig 1,
fig. 5 schematically in perspective and partly in section one of the dosing chambers of the dosing means of fig. 3,
fig. 6 schematically in perspective the single shaft with the multiple rotors of the dosing means disclosed in fig. 3,
fig. 7 two different embodiments of the pattern of the periphery of the wave-shaped rotor,
fig. 8 in vertical section the apparatus of fig. 1-3, however with another embodiment of the dosing means, and
fig. 9 in vertical section the apparatus of fig. 1-3, however with a further embodiment of the dosing means.

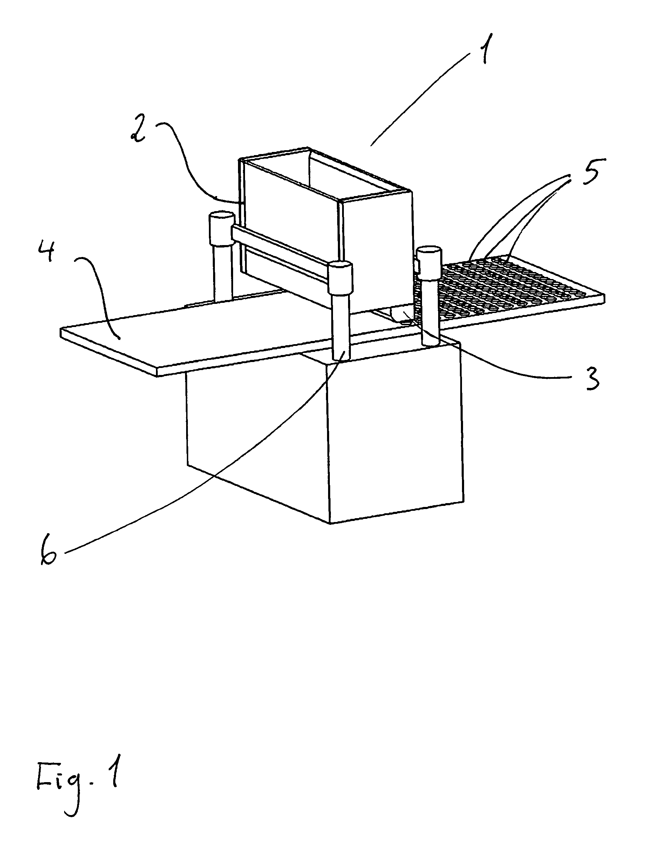

The inventive apparatus 1 schematically depicted in fig. 1 comprises an upper part, the elongated trough 2, which contains the edible mass to be deposited. When the mass to be deposited is kneaded dough, it is typically put into the trough as great lumps. However, the confectionery mass could also be continuously fed to the trough via tubes when it has sufficient flow ability as for example liquid chocolate. The lower part of the apparatus comprises the dosing means 3. The edible mass is deposited onto an underlying conveyor belt 4. By the disclosed example the mass is deposited as lumps 5 of mass consequently arranged in rows at the belt 4 as the conveyor moves the belt further on after each dosing operation. The conveyor belt 4 could be moved on continuously or with intermittent start-stop movements. The mass is typically confectionery or dough. The apparatus is supported by a schematically disclosed support frame 6.

The rows of lumps 5 of mass are transported on to a baking oven when we are talking about dough, and possibly further on to stations making final treatments with decorations of masses such as chocolate or chocolate-like recipes. When the mass constitutes of confectionery such as toffee, caramel or chocolate or chocolate-like mass, then the mass is typically deposited for moulding purposes into underlying mould cavities or directly on the conveyor as depicted in fig. 1 and fig. 2.

In the elongated trough 2 is arranged at least one roller, the inventive main feed roller 7.

The inventive roller 7 could be arranged in the trough as the only roller or be accompanied by an auxiliary roller 8.

The roller 7 comprises longitudinally extending and flexible impeller blades 9 arranged at the periphery 10 of the roller. A gap 11 extends between the outer surface 12 of the roller 7 and at least part of the inner surface 13 of the trough 2, so that the impeller blades 9 extend radially outwards from the roller 7 and into the gap 11.

During revolution of the roller 7 the impeller blades transport mass from the trough 2 and through the gap 11 towards the dosing means 3. The flexible impeller blades 9 simply grip into the mass and bring it with into the gap 11. In the gap 11 the mass is securely transported by the impellers 9 towards the dosing means 3.

Any ingredients in the mass such as nuts, chocolate pieces or other types of ingredients are gently swept into the gap 11 without any impact on the ingredients. In the gap 11 large chambers 14 are present in between the neighbouring impeller blades 9 sweeping through the gap 11. Then large amount of mass with or without ingredients are transported at the same time towards the dosing means 3. This secures that the texture of the mass such as of dough is not being influenced by the transport.

The flexibility of the impeller blades 9 is a safeguard for avoiding major pressure building up in the mass. During revolution of the roller 7, the impeller blades 9 presently in the gap 11 will simply flex more or less aside if pressure exceeding a certain limit is building up in the gap 11. Some of the mass present in the gap 11 then avoids the transporting action of the impeller blades 9. The relief pressure is controlled by the flexibility of the impeller blades 9 and may then be altered by changing from impellers 9 with great flexibility to impellers 9 with lesser flexibility when required. For example could impellers 9 with greater flexibility be applied when types of mass such as dough having delicate texture important to preserve all the way through the apparatus are deposited with the apparatus 1.Impellers 9 with lesser flexibility could be applied when masses such as caramel, toffee or the like are deposited.

By the disclosed embodiment the impeller blades 9 extend in the full inner length of the trough 2.

Preferably the radial length L of the impellers extending outside the peripheral surface of the roller 7 are adapted to the width G of the gap 11, so that the ends 15 of the impellers 9 reach the inner surface 13 of the trough 2. If the ends 15 of the impellers 9 are weared, then a certain flexibility still secures that the impellers 9 tighten against leakage during rotation.

When a longitudinally extending raised part 16 of the inner surface 13 of the trough 2 is arranged close to the periphery 10 of the roller 9, then the gap G is essentially reduced or diminished over that part 16. One at a time the impeller blades 9' are bent over the part 16 of the trough 2 arranged close to the periphery 10 of the roller 7, so that all of the mass transported through the gap 11 is delivered out through the dosing means 3. The longitudinally extending, raised part 16 of the trough 2 could be a thickening of the inner surface of the trough or a separate part, for example formed as a profile, which could be mounted in a groove or the like.

In fig. 2 the impeller blade 9' is disclosed in a position fully bent in by engagement with the raised part 16.

In fig. 3 the same as in figure 2 is disclosed, however with the roller 7 turned a few degrees further on to a position in which the impeller blade 9' has now left the raised part 16 and is free from that before the next impeller blade comes to engagement.

As further disclosed in figure 2 longitudinally extending recesses 17 are arranged in the peripheral surface of the roller 7. The impeller blades 9 can then bend into these recesses 17 when they pass the longitudinally extending raised part 16 of the inner surface of the trough 2 arranged close to the periphery 10 of the roller. Then a superb tightening action against leakage is achieved.

By the disclosed embodiment the impeller blades 9 comprise longitudinally extending thickenings 18 adapted to be fixed in longitudinally extending grooves 19 in the periphery of the roller. A simple and strong attachment and release are then secured.

The longitudinally extending thickenings 18 of the impeller blades 9 can be fixed in the grooves 19 of the rollers 7 by rods 20 arranged longitudinally in the grooves 19, a solution that is very fast to dismantle and mount again for exchange of impeller blades 9 and for cleaning purposes. Both impeller blades and rods are simply drawn axially out from the roller 7 when cleaning is to be done.

The apparatus comprises a further longitudinally extending, auxiliary roller 8 arranged above the main roller 7 and close to the inside of the trough 2. Masses with a very low inner shear force and high inner smearing such as dough for cookies or marzipan may then be perfectly fed to the main roller 7 with a sufficient pressure build up.

By the depicted example of fig. 2 the dosing means 3 comprises a single, schematically disclosed and longitudinally extending shaft 21. By the depicted embodiment the dosing means 3 comprises a plurality of cylindrical dosing chambers 22, which are arranged in line having the shaft 21 as a common shaft, i.e. fig. 4.

The rollers 7, 8 and the common shaft 21 of the dosing means 3 is driven by non-disclosed motor and gear.

The dosing means 3 comprises a longitudinally extending bottom plate 23 with openings 24 for the depositing of the mass through nozzles 25. All parts of the dosing means are maintained by a housing 26. The nozzles 25 could have different shapes and sections so that different cross-sections of the mass being deposited is achieved.

Each dosing chamber 22 is cylindrical and in each chamber is arranged a disc-shaped rotor 27 formed as a wave-shaped displacer being rotated by the common, longitudinally extending shaft 21. During rotation the mass is transported to the dosing means 3, in which the rotors 27 move the mass gently on to the depositing openings 24.

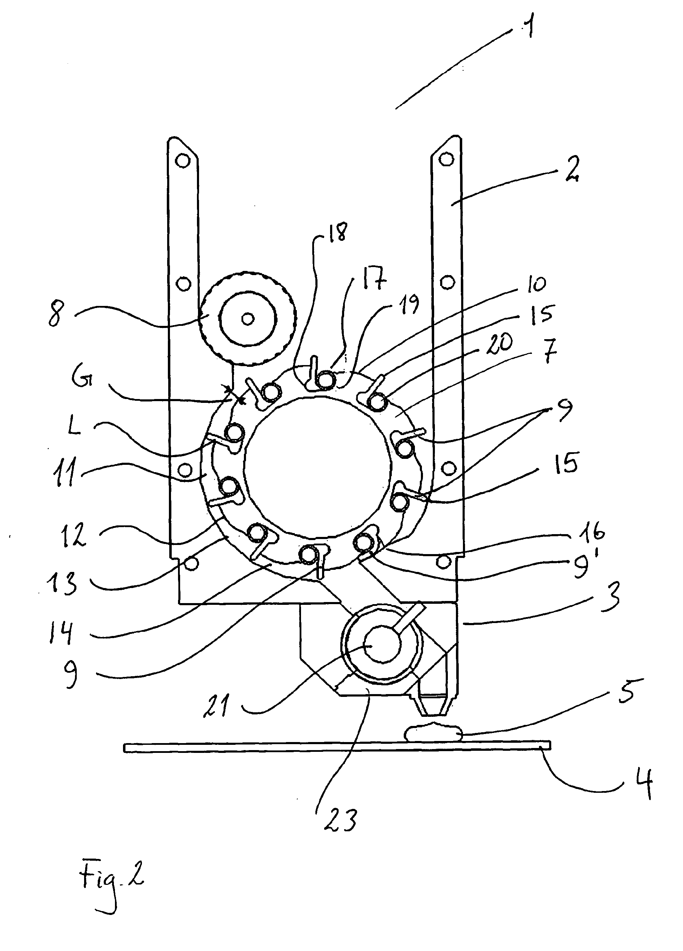

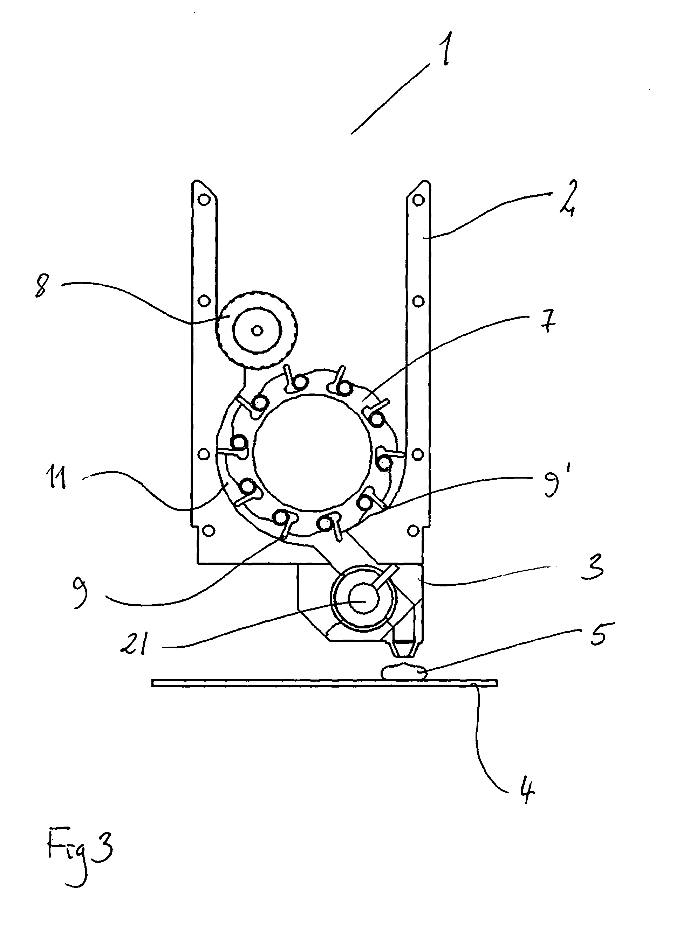

The individual dosing chambers 22 are identical in shape and configuration. Each chamber 22 is surrounded by two identical half-shells 28, 29 as disclosed in fig. 5.

The rotor 27 of each chamber 22 is arranged in between the two half-shells 28, 29. The half-shells 28, 29 are all maintained in the common housing 26, as depicted in fig. 4.

A closure plate 30 is arranged extending longitudinally and radially through each dosing chamber 22 for parting the suction side from the pressure side of the dosing chamber 22 as depicted in fig. 5. The closure plate 30 is arranged in notches 31, 32 in the half-shells 28, 29. The closure plate 30 further comprises a notch 33 into which the rotor 27 engages and slides, so that the closure plate 30 is given a reciprocal movement by the rotation of the wave-shaped rotor 27.

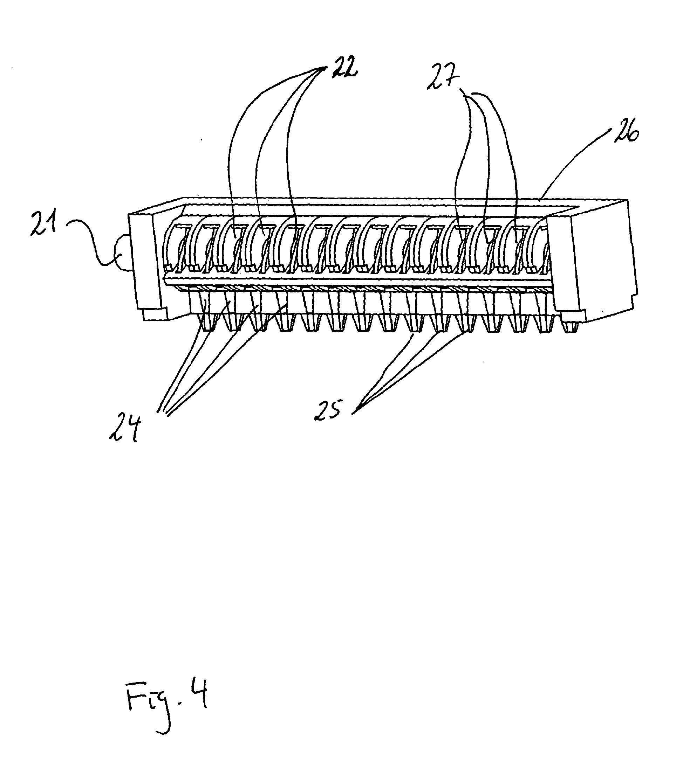

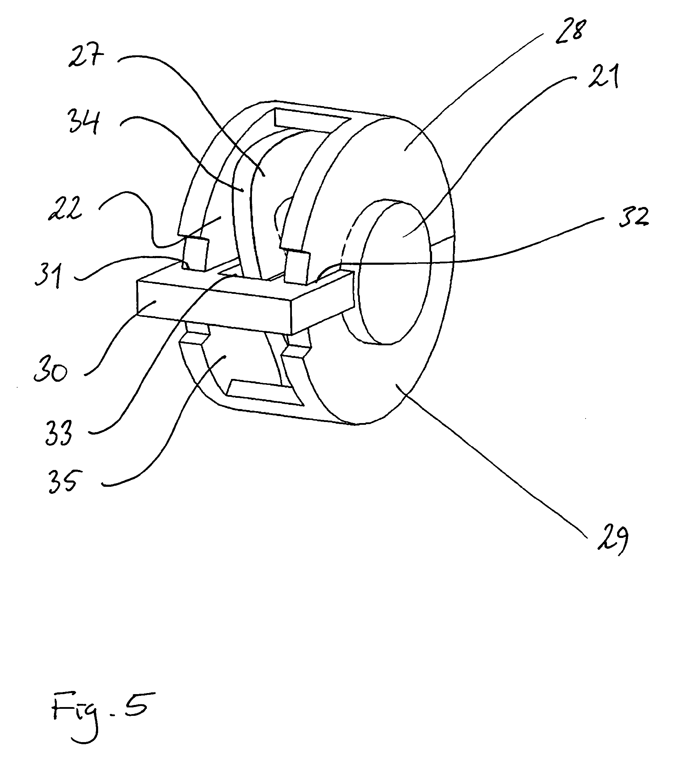

The rotors 27 are all arranged on the common shaft 21, of which part is schematically depicted in fig. 6. Typically the rotors 27 and the shaft 21 are manufactured by milling one piece into shape.

The rotors 27 are non-planar discs configured as wave-shaped displacers.

By the depicted embodiment in fig. 5 and 6 the waves of each disc-shaped rotor 27 are formed by essentially straight lines (X) connecting tops (T) and bottoms (S) of the waves.

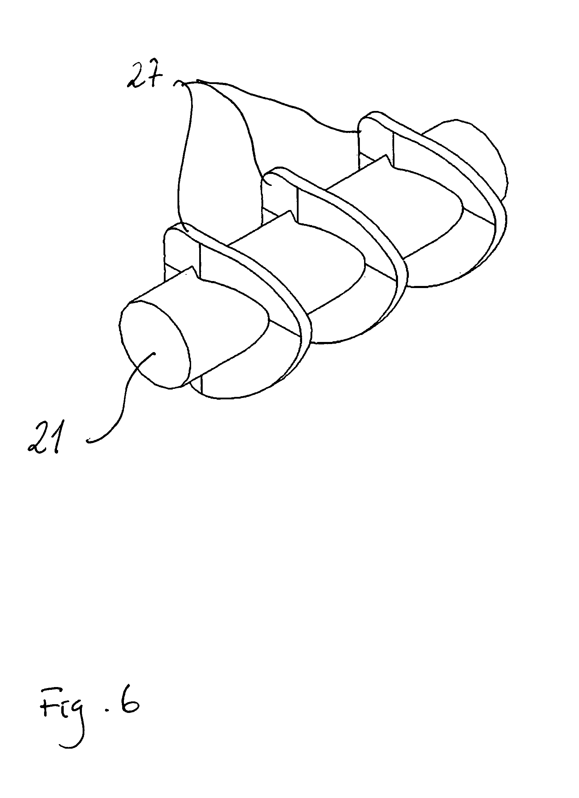

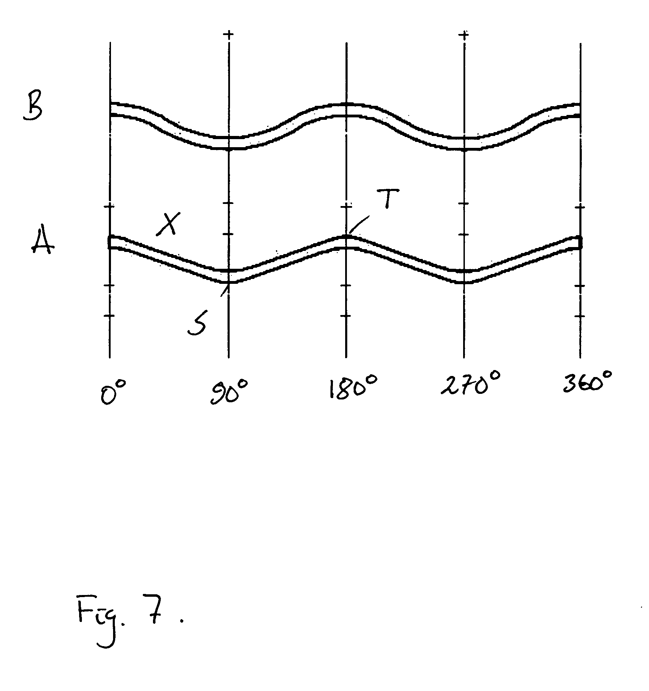

This is disclosed by example A of figure 7 depicting the pattern of the periphery of the wave-shaped rotor.

Tests with some of the most used dough types in the bakery industry deposited with the inventive solution of example A revealed, that there was essentially no compression of the dough mass. So what was discovered with the above inventive solution was, that the dosing means had remarkably little or diminishing influence even on masses sensitive to shear or having a "critical" texture, which must be preserved all the way through the process. It could be assumed that this benefit is also realised when other types of mass such as any type of confectionery mass is handled.

In fig. 7 is also disclosed an example B by which the waves are sinus shaped.

Generally, on basis of intensive testing it was concluded that a generally wave-shaped rotor handled masses with ingredients without damaging the ingredients whether the shape of the rotor was as in example A or example B or in between these.

During revolution of the shaft 21 the dosing is active, and the outer periphery 34 of the rotor 16 gently sweeps the inner surface 35 of the dosing chamber 22 in a wave-like intermittent movement. This secures, that any mass with ingredients, being large or small or soft or hard are safely swept into the dosing chamber 22, transported trough the chamber together with the mass, and safely being deposited at the deposit openings 24.

The wave-shaped rotor 27 of fig. 6 divides the dosing chamber 22 in four major enclosures active for the transportation of the mass and the ingredients through the dosing chamber. This ensures a great capacity in comparison with the prior art.

Also when the mass reaches the deposit opening 24, the periphery 34 of the rotor 27 again sweeps the depositing opening 24 in a wave-like intermittent movement, which provides a precise apportioning of the mass at each depositing. Then the dosing accuracy is severely improved in comparison with the known solutions, by which a triangle shaped volume of mass under the toothed rollers and above the depositing opening sets free uncontrollable varying amounts, which then gives rise to inconsistency in amounts of mass actually deposited on the conveyor.

As the dosing means comprises only one shaft instead of two as by the prior art, it is secured, that the dosing means can be arranged asymmetrically in the trough. Thereby, it becomes possible to connect a trough 2 with another trough in a mirrorlike manner for depositing a further mass or ingredients when required. If then only one mass type is required for depositing again at a later stage, then the surplus trough or troughs are simply removed again.

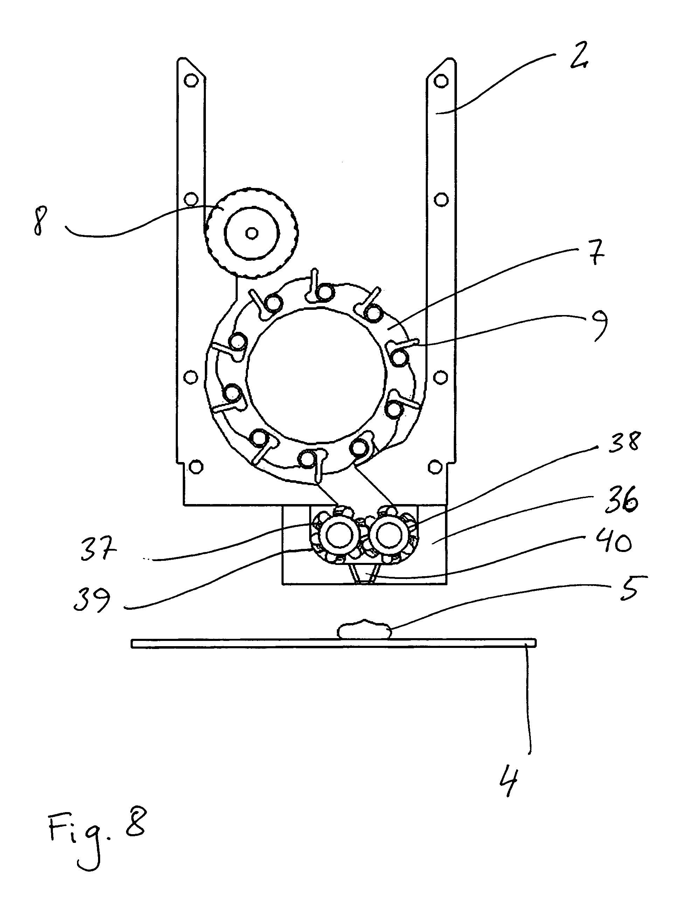

In figure 8 is disclosed another embodiment of the apparatus with trough 2 and the inventive roller 7, however with another configuration of the dosing means 36 in accordance with the prior art. In fig. 8 the dosing means 36 comprises a pair of toothed sprocket wheels 37, 38 in each dosing chamber 39 as already known in the prior art. The sprocket wheel 37 to the left in the drawing revolves anti-clockwise and the sprocket wheel 38 to the right revolves clockwise so that mass is then being dosed through the openings 40.

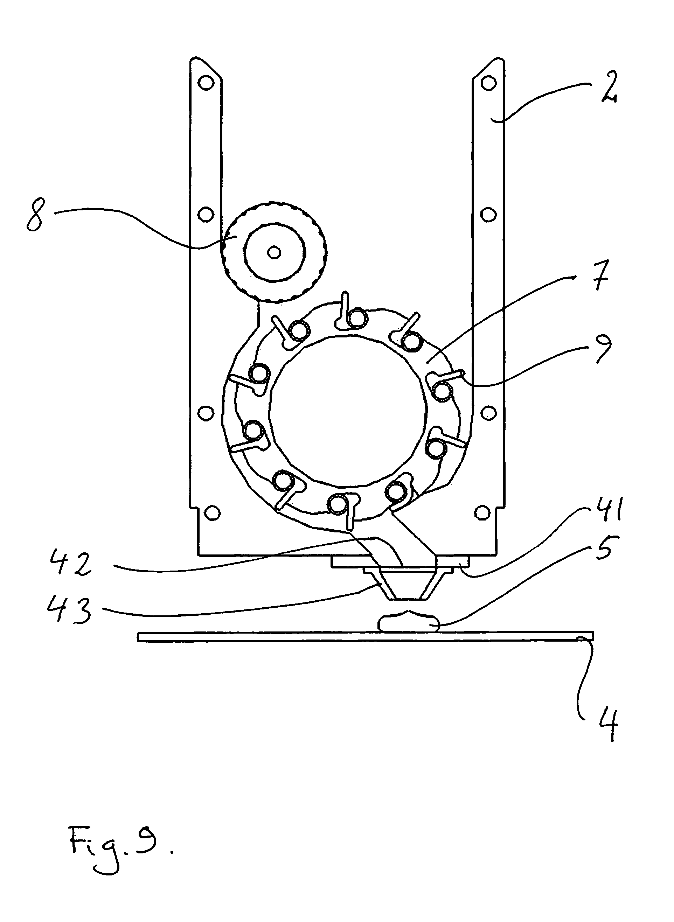

In a further embodiment as disclosed in figure 9 the dosing means comprises only a longitudinally extending plate 41 with openings 42 and nozzles 43 adapted for depositing the desired mass. Especially when the inventive apparatus is used for depositing extrudates in strands to be cut this embodiment is desirable and advantageous as it is simple and has an unforeseen high extruding capacity.

## Claims

1. Apparatus (1) for depositing edible mass, comprising an elongated trough (2), at least one roller (7) arranged longitudinally in the trough (2) for transporting the mass in direction against the bottom of the trough (2), as well as dosing means (3) arranged longitudinally at the bottom of the trough, said roller (7) longitudinally extending comprising impeller blades (9) arranged at the periphery (10) of the roller (7), and whereby a gap (11) extends between the outer surface (12) of the roller and at least part of the inner surface (13) of the trough (2), so that the impeller blades (9) extend radially outwards from the roller (7) and into the gap (11), and whereby a longitudinally extending raised part (16) of the inner surface of the trough (2) is arranged close to the periphery of the roller (7), so that the gap is essentially reduced or diminished over that part (16),
**characterized in that** the impeller blades (9) are flexible, and that longitudinally recesses (17) are arranged in the peripheral surface (10) of the roller (7), so that the impeller blades (9) can bend into these recesses (17) when they pass the raised part (16) of the inner surface of the trough.

2. Apparatus according to claim 1, **characterised in that** the impeller blades (9) comprise longitudinally extending thickenings (18) adapted to be fixed in longitudinally extending grooves (19) in the periphery of the roller (7).

3. Apparatus according to claim 2, **characterised in that** the longitudinally extending thickenings (18) of the impeller blades (9) are fixed in the grooves (19) of the rollers (7) by rods (20) arranged longitudinally in the grooves.

4. Apparatus according to claim 1, **characterised in that** it comprises a further longitudinally extending, auxiliary roller (8) arranged above the main roller (7) and close to the inside (13) of the trough (2).

5. Apparatus according to claim 1, **characterised in that** the dosing means (36) comprise at least one pair of engaging toothed wheels (37, 38) being driven by two parallel shafts.

6. Apparatus according to claim 1, **characterised in that** the dosing means (3) comprises only one single, longitudinally extending shaft (21), at least one cylindrical chamber (22), in which is arranged a disc-shaped rotor (27) formed as a wave-shaped displacer being rotated by the single, longitudinally extending shaft (21).

7. Apparatus according to claim 6, **characterized in that** the waves of the disc-shaped rotor (27) are formed by essentially straight lines (X) connecting tops (T) and bottoms (S) of the waves.

8. Apparatus according to claim 6, **characterized in that** the disc-shaped rotor (10) is formed as a sine wave-shaped displacer (B).

9. Apparatus according to claim 6, **characterized in that** the wave-shaped displacer (27) comprises four waves each extending over 90° of the periphery (34) of the rotor (27).

10. Apparatus according to claim 6, **characterized in that** the chamber (22) comprises a closure plate (30) arranged longitudinally and radially through the dosing chamber (22) for parting the suction side from the pressure side of the dosing chamber, and that the plate (30) further comprises a notch (33) into which the rotor (27) engages, so that the plate (30) is given a reciprocal movement by the rotation of the rotor (27).

11. Apparatus according to claim 1, **characterised in that** the dosing means (3) comprise nozzles (43).

## Patentansprüche

1. Vorrichtung (1) zum Ablegen essbarer Masse, umfassend einen länglichen Trog (2), wenigstens eine Walze (7), die in Längsrichtung im Trog (2) zum Transport der Masse in einer gegen den Boden des Trogs (2) gerichteten Richtung angeordnet ist, sowie ein Dosiermittel (3), das sich in Längsrichtung am Boden des Trogs erstreckend angeordnet ist, wobei die Walze (7) sich in Längsrichtung erstreckende Impellerflügel (9) umfasst, die am Umfang (10) der Walze (7) angeordnet sind, und wobei ein Spalt (11) sich zwischen der äußeren Oberfläche (12) der Walze und wenigstens einem Teil der Innenoberfläche (13) des Trogs (2) erstreckt, so dass die Impellerflügel (9) sich radial nach außen von der Walze (7) und in den Spalt (11) erstrecken, und wobei ein sich in Längsrichtung erstreckendes, erhöhtes Teil (16) der Innenoberfläche des Troges (2) in der Nähe des Umfangs der Walze (7) angeordnet ist, so dass der Spalt über dem Teil (16) erheblich reduziert oder verringert ist, **dadurch gekennzeichnet, dass** die Impellerflügel (9) flexibel sind und dass Längsaussparungen (17) in der Umfangsoberfläche (10) der Walze (7) angeordnet sind, so dass sich die Impellerflügel (9) in diese Aussparungen (17) krümmen können, wenn sie das erhöhte Teil (16) der Innenoberfläche des Trogs passieren.

2. Vorrichtung gemäß Anspruch 1, **dadurch gekennzeichnet, dass** die Impellerflügel (9) sich in Längsrichtung erstreckende Verdickungen (18) aufweisen, die so ausgelegt sind, dass sie in sich in Längsrichtung erstreckende Nuten (19) im Umfang der Walze (7) zu befestigen sind.

3. Vorrichtung gemäß Anspruch 2, **dadurch gekennzeichnet, dass** die sich in Längsrichtung erstreckenden Verdickungen (18) der Impellerflügel (9) in den Nuten (19) der Walzen (7) durch Stäbe (20) befestigt sind, die in Längsrichtung in den Nuten angeordnet sind.

4. Vorrichtung gemäß Anspruch 1, **dadurch gekennzeichnet, dass** sie ferner eine sich in Längsrichtung erstreckende Hilfswalze (8) umfasst, die über der Hauptwalze (7) und in der Nähe des Innenseite (13) des Trogs (2) angeordnet ist.

5. Vorrichtung gemäß Anspruch 1, **dadurch gekennzeichnet, dass** das Dosiermittel (36) wenigstens ein Paar aus in Eingriff stehenden Zahnrädern (37, 38) umfasst, die durch zwei parallele Wellen angetrieben werden.

6. Vorrichtung gemäß Anspruch 1, **dadurch gekennzeichnet, dass** das Dosiermittel (3) lediglich eine einzelne, sich in Längsrichtung erstreckende Welle (21, wenigstens eine zylindrische Kammer (22) umfasst, in der ein scheibenförmiger Rotor (27) angeordnet ist, der als ein wellenförmiges Verdrängungsmittel ausgebildet ist, das von der einzelnen, sich in Längsrichtung erstreckenden Welle (21) in Rotation versetzt wird.

7. Vorrichtung gemäß Anspruch 6, **dadurch gekennzeichnet, dass** die Wellen des scheibenförmigen Rotors (27) durch im Wesentlichen gerade Linien (X), verbindende obere Scheitel (T) und untere Scheitel (S) der Wellen gebildet werden.

8. Vorrichtung gemäß Anspruch 6, **dadurch gekennzeichnet, dass** der scheibenförmige Rotor (27) als ein sinuswellenförmiges Verdrängungsmittel (B) ausgebildet ist.

9. Vorrichtung gemäß Anspruch 6, **dadurch gekennzeichnet, dass** das wellenförmige Verdrängungsmittel (27) vier Wellen umfasst, die sich jeweils über 90° des Umfangs (34) des Rotors (27) erstrecken.

10. Vorrichtung gemäß Anspruch 6, **dadurch gekennzeichnet, dass** die Kammer (22) eine Verschlussplatte (30) umfasst, die durch die Dosierkammer (22) in Längs- und Radialrichtung angeordnet ist, um die Saugseite von der Druckseite der Dosierkammer zu trennen, und dass die Platte (30) ferner einen Nocken (33) umfasst, mit dem der Rotor (27) in Eingriff steht, so dass der Platte (30) eine Hin- und Herbewegung durch die Rotation des Rotors (27) auferlegt wird.

11. Vorrichtung gemäß Anspruch 1, **dadurch gekennzeichnet, dass** das Dosiermittel (3) Düsen (43) umfasst.

## Revendications

1. Dispositif (1) pour couler de la masse comestible, comprenant une cuve allongée (2), au moins un rouleau (7) arrangé longitudinalement dans la cuve (2) pour transporter la masse en direction vers le fond de la cuve (2), ainsi que des moyens de dosage (3) arrangés longitudinalement au fond de la cuve, le rouleau mentionné (7) comprenant des pales de roue à ailettes (9) longitudinalement étendues arrangées à la périphérie (10) du rouleau (7), et par quoi une ouverture (11) s'étend entre la surface extérieure (12) du rouleau et au moins une partie de la surface intérieure (13) de la cuve (2), de sorte que les pales de roue à ailettes (9) s'étendent radialement vers le dehors depuis le rouleau (7) et dans l'ouverture (11), et par quoi une partie élevée (16) longitudinalement étendue de la surface intérieure de la cuve (2) est arrangée près de la périphérie du rouleau (7), de sorte que l'ouverture soit réduite à disparition au-dessus de cette partie (16),
**caractérisé en ce que** les pales de roue à ailettes (9) sont flexibles, et que des creux longitudinaux (17) sont arrangés dans la surface périphérique (10) du rouleau (7), de façon que les pales de roue à ailettes (9) puissent plier dans ces creux (17) quand elles passent la partie élevée (16) de la surface intérieure de la cuve.

2. Dispositif selon la revendication 1, **caractérisé en ce que** les pales de roue à ailettes (9) comprennent des épaississements (18) longitudinalement étendus adaptés à être fixés dans des rainures (19) longitudinalement étendues dans la périphérie du rouleau (7).

3. Dispositif selon la revendication 2, **caractérisé en ce que** les épaississements (18) longitudinalement étendus des pales de roue à ailettes (9) sont fixées dans les rainures (19) des rouleaux (7) par des bâtons (20) arrangés longitudinalement dans les rainures.

4. Dispositif selon la revendication 1, **caractérisé en ce qu'**il comprend encore un rouleau auxiliaire (8) longitudinalement étendu arrangé au-dessus du rouleau principal (7) et près de l'intérieur (13) de la cuve (2).

5. Dispositif selon la revendication 1, **caractérisé en ce que** les moyens de dosage (36) comprennent au moins une paire de roues dentées (37, 38) engrenant entraînées par deux arbres parallèles.

6. Dispositif selon la revendication 1, **caractérisé en ce que** les moyens de dosage (3) comprennent seulement un arbre solitaire (21), longitudinalement étendu, au moins une chambre cylindrique (22), dans laquelle est arrangé un rotor discoïdal (27) formé en dispositif de déplacement ondulé tourné par l'arbre solitaire (21) étendu longitudinalement.

7. Dispositif selon la revendication 6, **caractérisé en ce que** les ondes du rotor discoïdal (27) sont formées par des lignes (X) essentiellement droites liant ensemble les parties supérieures (T) et les parties inférieures (S) des ondes.

8. Dispositif selon la revendication 6, **caractérisé en ce que** le rotor discoïdal (10) est formé en dispositif de déplacement (B) en ondes sinusoïdales.

9. Dispositif selon la revendication 6, **caractérisé en ce que** le dispositif de déplacement ondulé (27) comprend quatre ondes chacune étendant sur 90° de la périphérie (34) du rotor (27).

10. Dispositif selon la revendication 6, **caractérisé en ce que** la chambre (22) comprend une plaque de fermeture (30) arrangée longitudinalement et radialement par la chambre de dosage (22) pour séparer le côté de succion du côté de pression de la chambre de dosage, et que la plaque (30) comprend davantage une coupure (33) dans laquelle engrène le rotor (27), de sorte qu'un mouvement réciproque soit donné à la plaque (30) par la rotation du rotor (27).

11. Dispositif selon la revendication 1, **caractérisé en ce que** les moyens de dosage (3) comprennent des buses (43).
